# EUROPEAN PATENT SPECIFICATION

(11) **EP 4 048 495 B1**
(45) Date of publication and mention of the grant of the patent: **19.07.2023**
(21) Application number: 20781034.2
(22) Date of filing: 05.10.2020
(51) Int. Cl.: B29B 7/24, B29B 7/94, B29B 7/82, B29B 7/18, B29B 7/74

(54) **INJECTOR FOR INJECTION OF LIQUID CONSTITUENTS INTO AN INTERNAL MIXER, AND RELATED METHOD**
INJEKTOR ZUM EINSPRITZEN VON FLÜSSIGEN BESTANDTEILEN IN EINEN INTERNEN MISCHER UND ENTSPRECHENDES VERFAHREN
INJECTEUR POUR L'INJECTION DE CONSTITUANTS LIQUIDES DANS UN MÉLANGEUR INTERNE, ET PROCÉDÉ ASSOCIÉ

(30) Priority: 23.10.2019 FR 1911828
(43) Date of publication of application: 31.08.2022
(73) Proprietor: COMPAGNIE GENERALE DES ETABLISSEMENTS MICHELIN, 63000 Clermont-Ferrand (FR)
(72) Inventor: LE BARS, Lionel, 63040 Clermont-Ferrand Cedex 9 (FR)
(74) Representative: Roussy, Delphine
(86) International application number: PCT/EP2020/077835
(87) International publication number: WO 2021/078501

(56) References cited:
- CN-U- 208 052 321
- FR-A- 1 268 666
- JP-A- 2000 000 814
- JP-A- 2019 093 586
- US-A- 2 905 361
- US-A- 5 297 865
- US-A1- 2014 160 878

## Description

### Technical Domain

The invention is directed to an injector that allows liquid products to be introduced into a chamber of an internal mixer. More particularly, the invention is directed to the injection of different liquid products through the same injection orifice without intermixing therebetween.

### Background

In the field of rubber mixture manufacturing, internal, batch-type mixers of the Banbury type (and their equivalents) are well known for making rubber mixtures. During a mixing cycle realized by the internal mixer, the various raw materials can be fed into the mixer. Raw materials include the materials necessary to make the product obtained from a mixing cycle, including, without limitation, an elastomeric material (e.g., natural rubber, synthetic elastomer and combinations and equivalents thereof) and one or more ingredients, such as one or more processing agents, protective agents, reinforcing fillers and/or crosslinking or vulcanizing agents. All ingredients are introduced in varying quantities depending on the desired performance of the products obtained from the mixing cycles (e.g., tires). Raw materials may also include one or more liquid products including, but not limited to, silane, antioxidants (e.g. 6PPD), wax and stearic acid.

Several injector configurations have been developed for the introduction of liquid products inside the internal mixer (see, for example, US5297865A that discloses an injector for liquid thermoplastics and FR1268666A that discloses an injector for oil). These solutions, however, permit only one liquid at a time to be injected inside the internal mixer.

In another configuration, US2905361A proposes a solution for injecting many different oils using only one injector. Consequently, this solution not only realizes a long injection time, but it also introduces undesirable intermixing between oils.

Therefore, there are multi-way injectors on the market that simultaneously introduce several different liquid products into a chamber of an internal mixer. Most of these injectors, however, cause undesirable intermixing of the liquid products before they are introduced into an internal mixer.

In addition, there are a few solutions on the market that prevent the intermixing of liquid products. Such a solution of a multi-way injector is proposed, for example, by the company Zeppelin Systems ("Zeppelin") in the context of an automated product dosing system (or "liquid dosing system" or "LDS") (an embodiment of the system can be found on the site https://www.zeppelin-systems.com/videos.html). In the system proposed by Zeppelin, each liquid product is stored in a respective tank that remains connected to an injection point dedicated to the dosing of the corresponding liquid product. The injection points are multiplied while remaining at a small diameter, but it is not possible to realize, easily and quickly, a simultaneous injection of the different liquid products. The flow rates achieved by this system therefore remain limited.

In order to control faster injection of liquid products compared to existing solutions, the disclosed invention allows simultaneous injection of several different liquid products without intermixing. The disclosed invention is also provided with circulation channels for heat-transfer fluid that allow, depending on the liquid products to be treated, temperature control of the injection chamber (thus controlling the heating or cooling depending on the liquid product used). This makes it possible to allocate, on the same orifice of the mixer, products that are otherwise incompatible and that could not be used in an injector that puts them in contact before the introduction into the mixing chamber of an internal mixer.

### Summary of the invention

The invention is directed to an injector according to claim 1 for introducing different liquid products of a rubber mixture into a chamber of an internal mixer in which the injector is mounted, comprising:
- a cylindrical housing of a predetermined length between an injection end and an opposite end of the injector, the housing comprising an injection conduit, dedicated to the flow of a liquid product to form the mixture, the injection conduit extending between an outlet of the injection conduit, which is coextensive with the injection end of the housing, and an opposite inlet, and the injection conduit having a seat defined adjacent to the outlet;
- a valve disposed in the injection conduit that meters a corresponding liquid product, the valve including a longitudinal stem that extends between a tail disposed adjacent to the inlet of the injection conduit and a head disposed adjacent to the seat of the injection conduit;
- a return spring disposed around the stem of the valve that manages a sliding movement of the valve relative to the injection conduit between a closed position, where the head engages the seat and blocks the outlet of the injection conduit, and an open position, where the head no longer engages the seat and unblocks the outlet of the injection conduit;
- an injection device integrated with the housing and including a supply conduit that delivers a liquid product to a corresponding injection conduit from a reservoir in which the liquid product is stored, each supply conduit being arranged perpendicularly to a corresponding injection conduit to introduce the liquid product into the inlet of the injection conduit; the injector is characterized in that
- the housing comprises at least two injection conduits and in that
- a temperature control circuit is inside the injector.

In certain embodiments of the injector, the temperature control circuit includes:
- at least two control channels that extend axially along part of the length of the housing to the inside of the injection device;
- at least one control conduit disposed in the injection device that conveys a corresponding temperature control fluid to the injector, the control channels connecting to the control conduit; and
- a pipe of the injection device that introduces the temperature control fluid into a corresponding control conduit from a source of the temperature control fluid.

In certain embodiments of the injector, the housing includes at least three injection conduits, and the injection device includes a supply conduit in correspondence with each injection conduit.

In certain embodiments of the injector, the injector includes at least three control channels.

In certain embodiments of the injector, the control channels and the pipes are connected so that the temperature control fluid flows continuously in the temperature control circuit inside the injector.

The invention is also directed to a mixing system according to claim 6 for realizing mixing cycles of a rubber mixture, the system including an injector as disclosed and an internal mixer in which the injector is mounted.

The invention is further directed to a mixing cycle according to claim 7 realized by the disclosed mixing system, including the following steps:
- a step of injecting the liquid products into the internal mixer through the injector, during which the liquid products are dosed according to the selected rubber mixture recipe;
- a step of temperature control including a step of introducing one or more temperature control fluids into the temperature control circuit inside the injector; and
- a mixing step, in the internal mixer, of the different liquid products injected by the injector and other raw materials to form the mixture.

In certain embodiments of the cycle, the temperature control step is carried out before the step of injecting the liquid products.

In certain embodiments of the cycle, at least one of the step of injecting the liquid products and the temperature control step is performed iteratively during the mixing cycle.

In certain embodiments of the cycle, the raw materials introduced during the mixing step include at least one elastomer material.

Other aspects of the invention will become evident from the following detailed description.

### Brief description of the drawings

The nature and the various advantages of the invention will become more obvious when reading the following detailed description, together with the attached drawings, in which the same reference numbers designate identical parts everywhere, and in which:
Figure 1 represents a perspective view of an embodiment of an injector of the invention.
Figure 2 represents a sectional view along line A-A of Figure 1.
Figure 3 represents a partial transparent view, and Figure 4 represents a partial cross-sectional view, of the injector of Figure 1.
Figure 5 represents a flayed view of a temperature control circuit of the injector of Figure 1.

### Detailed description

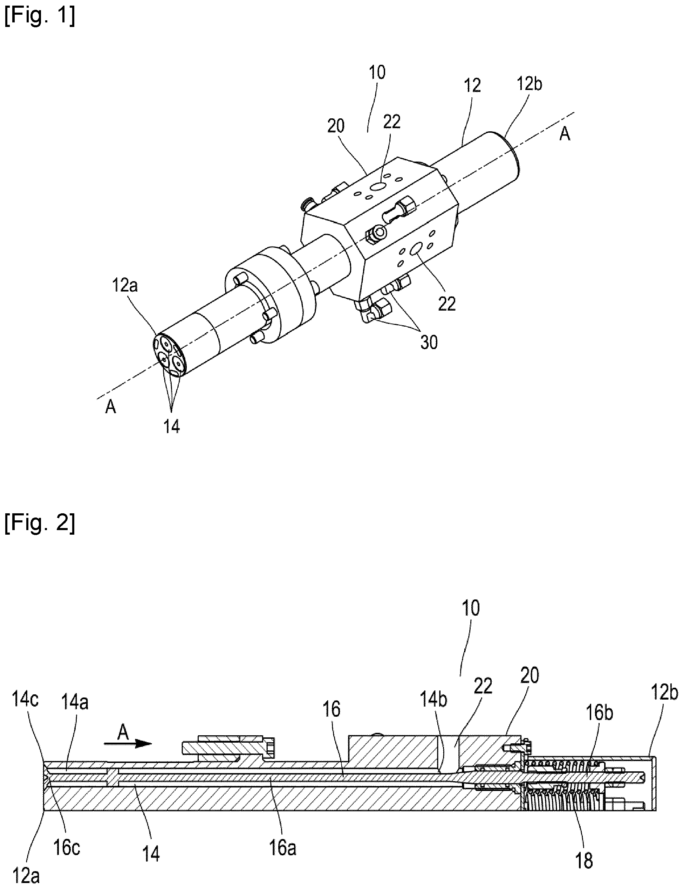

Referring now to the figures, in which the same numbers identify identical elements, Figures 1 and 2 represent an embodiment of a multi-way injector (or "injector") 10 that introduces liquid products into a chamber of an internal mixer. Injector 10 is suitable for installation in internal mixers that are well known for making rubber mixtures. The term "internal mixer" (or "mixer" or "MI") refers to Banbury type mixers and their equivalents. Injector 10 includes a multi-way injector incorporating at least two channels, each dedicated to a corresponding liquid product. "Multi-way" means that the injector is capable of dosing at least two different liquid products into an internal mixer during a mixing cycle. In some embodiments of the invention, the injector 10 is capable of dosing at least three different liquid products from their respective storage means to the internal mixer in which the injector is mounted. It is well understood that it is not mandatory to dose all the different liquid products at the same time. Any of the available liquid products can be dosed according to the selected rubber mixing recipe. It is also understood that the dosing of the liquid products can be done either in a preferred order or simultaneously depending on the selected rubber mixing recipe.

The injector 10 includes a cylindrical housing (or "housing") 12 of a predetermined length between an injection end 12a and an opposite end 12b of the injector. The housing 12 includes at least two injection conduits 14, with each injection conduit 14 dedicated to the flow of a liquid product from a reservoir in which the liquid product is stored. Each injection conduit 14 extends between an outlet 14a of the injection conduit, which is coextensive with the injection end 12a of housing 12, and an opposite inlet 14b. A seat 14c is defined towards outlet 14a.

In the embodiment of the injector 10 shown in the figures, the injector 10 has three injection conduits 14. It is understood that the number of injection conduits can be varied according to the selected rubber mixture and/or according to the internal mixer used (e.g., two, three or more injection conduits can be expected). Consequently, the injector 10 can accommodate several different liquid products at the same time, regardless of the properties of the liquid products (e.g., varying viscosities).

A valve 16 is arranged in each injection conduit 14 to dose a corresponding liquid product. The valve 16 includes a longitudinal stem 16a that extends between a tail 16b and a head 16c that is located adjacent to the seat 14c of the injection conduit 14. A return spring 18 that is disposed around the stem 16b of the valve 16 controls a sliding movement of the valve relative to the injection conduit 14 between a closed position (shown in Figures 1 and 2), where the head 16c conforms to the shape of the seat 14c and blocks the outlet 14a of the injection conduit 14 (preventing the supply of liquid product to the internal mixer), and an open position (not shown), where the head 16c is no longer in contact with the seat 14c and the outlet 14a of the injection conduit 14 is unblocked (allowing liquid product to be dosed to the internal mixer).

It is understood that the configuration of the injection conduit 14 with the valve 16 arranged inside is shown as an example. The other injection conduits and valves of the injector 10 have the same configuration as that shown in Figures 1 and 2, and therefore they work in an identical manner. Understandably, the cross-sectional diameters of the injection conduits 14 can be adjusted according to the selected rubber mixing recipe. These dimensions are selected to ensure the correct dosage in the internal mixer. In addition, the tension of the return spring 18 can be selected or adjusted (e.g., by means of a screw system known for adjusting the spring tension) depending on the viscosity and the dosage of the liquid products to be fed into the internal mixer.

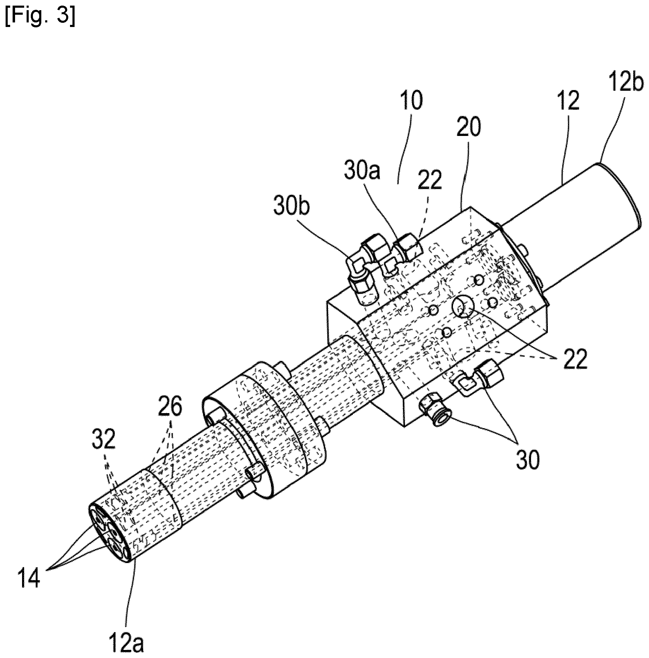

Referring again to Figures 1 and 2, and also to Figures 3 to 5, the injector 10 also includes an injection device 20. The injection device 20 is associated with the housing 12 in such a way as to allow the injection of different liquid products and also includes a means of circulating temperature control fluids (or "control fluids") in the injector 10. "Temperature control" means either cooling or heating of a liquid product in order to achieve a desired viscosity of the liquid product. The temperature of a temperature control fluid may be varied during a mixing cycle to ensure a continuous flow of liquid product through the injection conduits 14 and also to ensure complete injection of the liquid product into the internal mixer.

To introduce the liquid products needed to make a selected rubber mixing recipe, the injection device 20 includes a supply conduit 22 in correspondence with each injection conduit 14 of the injector 10. In the embodiment of the injector 10 shown in the figures, the injection device 20 includes three supply conduits 22 (one supply conduit 22 is associated with each injection conduit 14). It is understood that the number of supply conduits may vary according to the number of injection conduits.

Each supply conduit 22 delivers a corresponding liquid product (such as, but not limited to, silane, antioxidants (e.g., 6PPD), wax and stearic acid) to the injection conduit 14 from a storage tank (not shown) that stores the liquid product being delivered (the transport of the liquid product from the tank to the supply line being by pipe or known equivalent means). Depending on the mixture selected for mixing in the internal mixer, each liquid product is dosed as it leaves the storage tank. A known dosing means (for example, using pumps and control means such as mass flow meters) is used so that a precise dose of liquid product arrives at the supply conduit 22 before it is introduced into the injector 10.

Each supply conduit 22 is arranged perpendicularly with respect to a corresponding injection conduit 14 to introduce the liquid product at the inlet 14b of the injection conduit 14, the inlet being positioned relative to the valve 16 between the tail 16b and the head 16c. The pressure at which the liquid product exits the supply conduit 22 is sufficient to overcome the force of the return spring 18 to disengage the head 16c from the seat 14c of the injection conduit 14. The valve 16 moves from the closed position to the open position to inject the dose of liquid product into the mixing chamber of the internal mixer (see arrow A in Figure 2). When the injection of the liquid product is finished, the return spring 18 returns the head 16c to the seat 14c so that valve 16 can return to the closed position. Precise dosing of the liquid product is ensured by the injector 10. Thus, during the mixing cycles, a precise injection of the liquid products into the internal mixer is ensured.

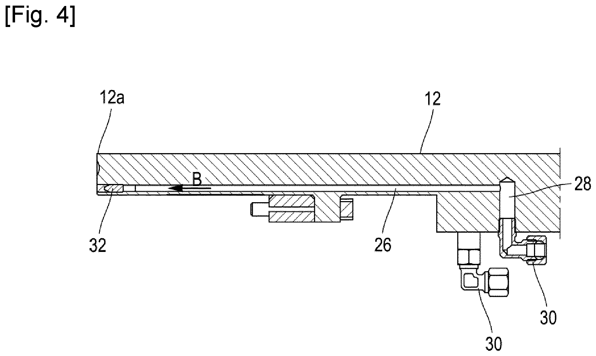

Referring again to Figures 1 to 5, the injector 10 has temperature control channels (or "control channels") 26 that extend axially along part of the length of the housing 12 into the interior of the injection device 20. The control channels 26 are arranged along the housing 12 (see Figure 4) and are connected to temperature control conduits (or "control conduits") 28 provided in the injection unit 20. For the embodiment shown, the injector 10 has three control channels 26, but the number of control channels can be adapted as required.

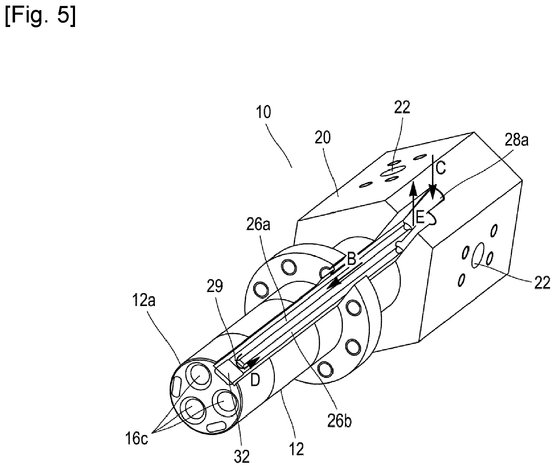

Each control conduit 28 conveys a corresponding control fluid to the injector 10 (and more specifically to the injection device 20 and the housing 12) (see Figures 4 and 5). The control fluid is introduced into each control conduit 28 through a pipe 30 from a temperature control system (not shown) using a known control fluid (such as water, steam, gas or other known temperature control fluid). The control channels 26, the control conduits 28 and the pipes 30 together form a temperature control circuit inside the injector 10 to control the temperature of the liquid products to be injected during a mixing cycle.

Referring to Figure 5, a representative flow of control fluid is given as an example. A first pipe 30a (shown in Figure 3) introduces a control fluid into a corresponding first control conduit 28a (see arrow C in Figure 5). The first control conduit 28a conveys the control fluid in the injection device 20 to a corresponding control channel 26a. The control fluid flows through the control channel 26 until it reaches a junction channel 29 between the first control conduit 28a and a second control conduit 28b (see arrow B in Figure 5 that corresponds to arrow B in Figure 4). The control fluid continues to flow through the control channel 26 to a plug 32 that directs fluid flow from the junction channel 29 to the second control conduit 28b (see arrow D in Figure 5). In this example, the control fluid flowing through the second control conduit 28b (see arrow E in Figure 5) enters a second pipe 30b (shown in Figure 3). Finally, the control fluid exits the second pipe 30b into a third pipe (not shown) and is again directed to the injector 10 (for example, by installing a control line between the second and third pipes).

In some embodiments of the injector 10, the temperature control circuit is said to be "in series" when the same volume of control fluid can flow through the entire circuit (by "circuit" is meant the control channels 26, the control conduits 28 and the pipes 30). In other embodiments of the injector 10, an individual volume of control fluid can be introduced into the injector 10 and can flow out to the control system through a single control conduit 28. The configuration of the injector 10 allows for quick adjustment between these modes.

A mixing system (or "system") of the invention includes the injector 10 and the internal mixer in which the injector is mounted. The system performs a mixing cycle of a rubber mixture including a step of injecting the liquid products into the internal mixer through the injector 10. During this step, the liquid products are dosed according to the selected rubber mixture recipe.

The mixing cycle performed by the system further includes a temperature control step including a step of introducing temperature control fluid(s) (or "control fluids") to the control channels 26. This step can be performed prior to the injection of the liquid products so that the control channels 26 can regulate the temperature of the housing 12 in advance of the introduction of the liquid products into the injection conduits 14. Thus, the housing 12 has already reached a desired temperature as a function of the liquid products before their introduction. It is understood that this step can be carried out after or simultaneously with the step of injecting the liquid products.

The step of injecting the liquid products and the temperature control step can be carried out iteratively during the mixing cycle. In some embodiments of the mixing system, the control conduits 28 and the pipes 30 can be connected so that the control fluid flows continuously in the temperature control circuit inside the injector 10.

The mixing cycle realized by the system also includes a step of mixing, in the internal mixer, the different liquid products injected by the injector 10 and the different raw materials to form the mixture. During this step, all ingredients are introduced in variable quantities according to the desired performance of the products obtained from the mixing cycle (for example, tires). At the end of the mixing cycle, the product is finished mixing and can be used in a downstream process (that may be, for example, a palletizing process, a shaping process, and/or another mixing process and/or an extrusion process).

The dosing of liquid products and their injection into the internal mixer can be done as part of the mixing cycle. The dosing of the liquid products and their injection into the internal mixer can be done by PLC control and can include pre-programming of the management information. For example, a cycle setting can be associated with the liquid products that are supplied to the mixer, including (without limitation) their respective viscosities and dosing volumes, and the properties of the mixture exiting the mixer.

For all embodiments, a monitoring system could be set up to ensure a correct dosage of different liquid products in the internal mixer. In addition, such a system could be set up to ensure the synchronization of injection of the liquid products during the mixing cycle performed by the mixing system. At least part of the monitoring system may be provided in a portable device such as a mobile network device (e.g., cell phone, laptop computer, network-attached portable device(s) (including "augmented reality" and/or "virtual reality" devices, network-attached wearable clothing and/or any combination and/or equivalent)).

In some embodiments of the invention, the injector 10 (and/or the mixing system incorporating the injector 10) may receive voice commands or other audio data representing, for example, a start or a stop of the supply of a liquid product(s). The request may include a request for the current status of a mixing cycle including (without limitation) the injection status of the liquid product(s). A generated response can be represented in an audible, visual, tactile (e.g., using a haptic interface) and/or virtual or augmented manner.

In an embodiment, the mixing cycle may include a step of training the injector 10 (or training the mixing system that incorporates the injector 10) to recognize representative values of the liquid products exiting the injector (e.g., temperature, viscosity and volume values) and to make a comparison with target values. This step may include the step of training the injector 10 to recognize non-equivalences between the values being compared. Each training step includes a classification generated by self-learning means.

The injector 10 can inject several different liquid products without any intermixing of the liquid products with each other, thus avoiding the risk of pollution of the liquid products with each other. Thus, the injector 10 (and the mixing system that incorporates the injector 10) reduces the injection time of liquid products in the mixer, thereby achieving a gain in mixing cycle time. Consequently, the invention preserves all of the advantages of simultaneous injection without loss of flow.

The terms "at least one" and "one or more" are used interchangeably. Ranges that are presented as "between a and b" include the values "a" and "b".

## Claims

1. An injector (10) for introducing different liquid products of a rubber mixture into a chamber of an internal mixer in which the injector (10) is mounted, the injector (10) comprising:
- a cylindrical housing (12) of a predetermined length between an injection end (12a) and an opposite end (12b) of the injector, the housing (12) comprising an injection conduit (14) dedicated to the flow of a liquid product to form the mixture, the injection conduit (14) extending between an outlet (14a) of the injection conduit, which is coextensive with the injection end (12a) of the housing (12), and an opposite inlet (14b), and the injection conduit comprising a seat (14c) defined adjacent to the outlet (14a);
- a valve (16) disposed in the injection conduit (14) that meters a corresponding liquid product, the valve (16) comprising a longitudinal stem (16a) that extends between a tail (16b) disposed adjacent the inlet (14b) of the injection conduit (14) and a head (16c) disposed adjacent the seat (14c) of the injection conduit;
- a return spring (18) disposed around the stem (16b) of the valve (16) that controls a sliding movement of the valve (16) relative to the injection conduit (14) between a closed position, where the head (16c) engages the seat (14c) and blocks the outlet (14a) of the injection conduit (14), and an open position, where the head (16c) no longer engages the seat (14c) and unblocks the outlet (14a) of the injection conduit (14);
- an injection device (20) integrated with the housing (12) and comprising a supply conduit (22) that delivers a liquid product to a corresponding injection conduit (14) from a reservoir in which the liquid product is stored, each supply conduit (22) being arranged perpendicularly to a corresponding injection conduit (14) to introduce the liquid product to the inlet (14b) of the injection conduit (14); the injector is **characterized in that**
- the housing (12) comprises at least two injection conduits (14) and **in that**
- a temperature control circuit is inside the injector (10).

2. The injector (10) of claim 1, wherein the temperature control circuit comprises:
- at least two control channels (26) that extend axially along a portion of the length of the housing (12) into the interior of the injection device (20);
- at least one control conduit (28) disposed in the injection device (20) that carries a corresponding temperature control fluid to the injector (10), the control channels (26) connecting to the control conduit (28); and
- a pipe (30) of the injection device (20) that introduces the temperature control fluid into a corresponding control conduit (28) from a source of the temperature control fluid.

3. The injector (10) of claim 2, wherein the housing (12) comprises at least three injection conduits (14) and the injection device comprises a supply conduit (22) in correspondence with each injection conduit (14).

4. The injector (10) of claim 3, wherein the injector comprises at least three control conduits (28).

5. The injector (10) of any one of claims 2 to 4, wherein the control conduits (28) and the pipes (30) are connected in such a way that the temperature control fluid flows continuously in the temperature control circuit within the injector (10).

6. A mixing system for performing mixing cycles of a rubber mixture, the system comprising an injector according to any of claims 1 to 5 and an internal mixer in which the injector is mounted.

7. A mixing cycle performed by the system of claim 6, comprising the following steps:
- a step of injecting the liquid products into the internal mixer through the injector (10), during which the liquid products are dosed according to the selected rubber mixture recipe;
- a temperature control step comprising a step of introducing one or more temperature control fluids into the temperature control circuit inside the injector (10); and
- a mixing step, in the internal mixer, of the different liquid products injected by the injector (10) and other raw materials to form the mixture.

8. The mixing cycle of claim 7, wherein the temperature control step is performed before the step of injecting the liquid products.

9. The mixing cycle of claim 7 or claim 8, wherein at least one of the step of injecting the liquid products and the temperature control step is performed iteratively during the mixing cycle.

10. A mixing cycle according to any one of Claims 7 to 9, wherein the other raw materials introduced during the mixing step comprise at least one elastomeric material.

## Patentansprüche

1. Injektor (10) zur Einführung unterschiedlicher flüssiger Produkte eines Gummigemischs in eine Kammer eines internen Mischers, in dem der Injektor (10) montiert ist, wobei der Injektor (10) Folgendes umfasst:
- ein zylindrisches Gehäuse (12) einer vorbestimmten Länge zwischen einem Einspritzende (12a) und einem gegenüberliegenden Ende (12b) des Injektors, wobei das Gehäuse (12) eine Einspritzleitung (14) umfasst, die für den Strom eines flüssigen Produkts zum Bilden des Gemisches bestimmt ist, wobei sich die Einspritzleitung (14) zwischen einem Auslass (14a) der Einspritzleitung, der koextensiv mit dem Einspritzende (12a) des Gehäuses (12) ist, und einem gegenüberliegenden Einlass (14b) erstreckt und wobei die Einspritzleitung einen Sitz (14c) umfasst, der angrenzend an den Auslass (14a) definiert ist;
- ein Ventil (16), angeordnet in der Einspritzleitung (14), das ein entsprechendes flüssiges Produkt dosiert, wobei das Ventil (16) einen länglichen Schaft (16a) umfasst, der sich zwischen einem Ende (16b), angeordnet angrenzend an den Einlass (14b) der Einspritzleitung (14), und einem Kopf (16c), angeordnet angrenzend an den Sitz (14c) der Einspritzleitung, erstreckt;
- eine Rückholfeder (18), angeordnet um den Schaft (16b) des Ventils (16), die eine gleitende Bewegung des Ventils (16) relativ zur Einspritzleitung (14) zwischen einer geschlossenen Position, in der der Kopf (16c) in Eingriff mit dem Sitz (14c) ist und den Auslass (14a) der Einspritzleitung (14) blockiert, und einer offenen Position, in der der Kopf (16c) nicht länger in Eingriff mit dem Sitz (14c) ist und den Auslass (14a) der Einspritzleitung (14) freigibt, steuert;
- eine Einspritzvorrichtung (20), integriert mit dem Gehäuse (12) und eine Zufuhrleitung (22) umfassend, die ein flüssiges Produkt aus einem Behälter, in dem das flüssige Produkt gelagert ist, zu einer entsprechenden Einspritzleitung (14) liefert, wobei jede Zufuhrleitung (22) senkrecht zu einer entsprechenden Einspritzleitung (14) angeordnet ist, um das flüssige Produkt in den Einlass (14b) der Einspritzleitung (14) einzuführen; wobei der Injektor **dadurch gekennzeichnet ist, dass**
- das Gehäuse (12) mindestens zwei Einspritzleitungen (14) umfasst, und dadurch, dass
- ein Temperatursteuerkreis im Inneren des Injektors (10) ist.

2. Injektor (10) nach Anspruch 1, wobei der Temperatursteuerkreis Folgendes umfasst:
- mindestens zwei Steuerkanäle (26), die sich axial entlang eines Teils der Länge des Gehäuses (12) in das Innere der Einspritzvorrichtung (20) erstrecken;
- zumindest eine Steuerleitung (28), angeordnet in der Einspritzvorrichtung (20), die ein entsprechendes Temperatursteuerfluid zum Injektor (10) transportiert, wobei die Steuerkanäle (26) mit der Steuerleitung (28) verbunden sind; und
- ein Rohr (30) der Einspritzvorrichtung (20), das das Temperatursteuerfluid aus einer Quelle des Temperatursteuerfluids in eine entsprechende Steuerleitung (28) einführt.

3. Injektor (10) nach Anspruch 2, wobei das Gehäuse (12) mindestens drei Einspritzleitungen (14) umfasst und die Einspritzvorrichtung eine Zufuhrleitung (22) in Entsprechung mit jeder Einspritzleitung (14) umfasst.

4. Injektor (10) nach Anspruch 3, wobei der Injektor mindestens drei Steuerleitungen (28) umfasst.

5. Injektor (10) nach einem der Ansprüche 2 bis 4, wobei die Steuerleitungen (28) und die Rohre (30) in einer solchen Weise verbunden sind, dass das Temperatursteuerfluid kontinuierlich im Temperatursteuerkreis innerhalb des Injektors (10) strömt.

6. Mischsystem zur Durchführung von Mischzyklen eines Gummigemisches, wobei das System einen Injektor nach einem der Ansprüche 1 bis 5 und einen internen Mischer, in dem der Injektor montiert ist, umfasst.

7. Mischzyklus, durchgeführt durch das System nach Anspruch 6, der die folgenden Schritte umfasst:
- einen Schritt des Einspritzens der flüssigen Produkte in den internen Mischer durch den Injektor (10), währenddessen die flüssigen Produkte entsprechend dem ausgewählten Rezept für das Gummigemisch dosiert werden;
- einen Temperatursteuerschritt, umfassend einen Schritt des Einführens eines oder mehrerer Temperatursteuerfluide in den Temperatursteuerkreis innerhalb des Injektors (10); und
- einen Mischschritt, im internen Mischer, der verschiedenen durch den Injektor (10) eingespritzten flüssigen Produkte und anderer Rohmaterialien zum Bilden des Gemisches.

8. Mischzyklus nach Anspruch 7, wobei der Temperatursteuerschritt vor dem Schritt des Einspritzens der flüssigen Produkte durchgeführt wird.

9. Mischzyklus nach Anspruch 7 oder Anspruch 8, wobei zumindest einer aus dem Schritt des Einspritzens der flüssigen Produkte und dem Temperatursteuerschritt während des Mischzyklus iterativ durchgeführt wird.

10. Mischzyklus nach einem der Ansprüche 7 bis 9, wobei die anderen während des Mischschritts eingeführten Rohmaterialien zumindest ein elastomeres Material umfassen.

## Revendications

1. Injecteur (10) pour introduire des produits liquides différents d'un mélange de caoutchouc mélangé dans une chambre d'un mélangeur interne dans lequel l'injecteur (10) est monté, l'injecteur (10) comprenant :
- un logement (12) cylindrique d'une longueur prédéterminée entre une extrémité d'injection (12a) et une extrémité opposée (12b) de l'injecteur, le logement (12) comprenant un conduit d'injection (14), dédié à l'écoulement d'un produit liquide pour former le mélange, le conduit d'injection (14) s'étendant entre une sortie (14a) du conduit d'injection, qui est coextensive avec l'extrémité d'injection (12a) du logement (12), et une entrée (14b) opposée, et le conduit d'injection comprenant un siège (14c) défini adjacent à la sortie (14a);
- une soupape (16) disposée dans le conduit d'injection (14) qui dose un produit liquide correspondant, la soupape (16) comprenant une tige (16a) longitudinale qui s'étend entre une queue (16b) disposée de manière adjacente à l'entrée (14b) du conduit d'injection (14) et une tête (16c) disposée de manière adjacente au siège (14c) du conduit d'injection ;
- un ressort de rappel (18) disposé autour de la queue (16b) de la soupape (16) qui gère un mouvement coulissant de la soupape (16) par rapport au conduit d'injection (14) entre une position fermée, où la tête (16c) engage le siège (14c) et bloque la sortie (14a) du conduit d'injection (14), et une position ouverte, où la tête (16c) n'engage plus le siège (14c) et débloque la sortie (14a) du conduit d'injection (14) ;
- un dispositif d'injection (20) intégré avec le logement (12) et comprenant un conduit d'alimentation (22) qui achemine un produit liquide à un conduit d'injection (14) correspondant en provenance d'un réservoir dans lequel le produit liquide est stocké, chaque conduit d'alimentation (22) étant disposé perpendiculairement par rapport à un conduit d'injection (14) correspondant pour introduire le produit liquide à l'entrée (14b) du conduit d'injection (14); l'injecteur étant **caractérisé en ce que** :
- le logement (12) comprend au moins deux conduits d'injection (14) et **en ce que**
- un circuit de régulation de température est à l'intérieur de l'injecteur (10).

2. Injecteur (10) de la revendication 1, dans lequel le circuit de régulation de température comprend :
- au moins deux canaux de régulation (26) qui s'étendent axialement le long d'une partie de la longueur du logement (12) jusqu'à l'intérieur du dispositif d'injection (20) ;
- au moins un conduit de régulation (28) disposé dans le dispositif d'injection (20) qui achemine un fluide de régulation de température correspondant à l'injecteur (10), les canaux de régulation (26) se raccordant aux conduits de régulation (28) ; et
- un tuyau (30) du dispositif d'injection (20) qui introduit le fluide de régulation de température dans un conduit de régulation (28) correspondant en provenance d'une source du fluide de régulation de température.

3. Injecteur (10) de la revendication 2, dans lequel le logement (12) comprend au moins trois conduits d'injection (14) et le dispositif d'injection comprend un conduit d'alimentation (22) en correspondance avec chaque conduit d'injection (14).

4. Injecteur (10) de la revendication 3, dans lequel l'injecteur comprend au moins trois conduits de régulation (28).

5. Injecteur (10) de l'une quelconque des revendications 2 à 4, dans lequel les conduits de régulation (28) et les tuyaux (30) sont mis en communication de sorte que le fluide de régulation de température s'écoule en continu dans le circuit de régulation de température à l'intérieur de l'injecteur (10).

6. Système de mélangeage pour réaliser des cycles de mélangeage d'un mélange de caoutchouc, le système comprenant un injecteur selon une quelconque des revendications 1 à 5 et un mélangeur interne dans lequel l'injecteur est monté.

7. Cycle de mélangeage réalisé par le système de la revendication 6, comprenant les étapes suivantes :
- l'étape d'injection des produits liquides dans le mélangeur interne par l'injecteur (10), pendant laquelle les produits liquides sont dosés en fonction de la recette du mélange de caoutchouc choisie ;
- l'étape de régulation de température comprenant une étape d'introduction d'un ou des fluides de régulation de température dans le circuit de régulation de température à l'intérieur de l'injecteur (10) ; et
- l'étape de mélangeage, dans le mélangeur interne, des produits liquides différents injectés par l'injecteur (10) et d'autres matières premières pour former le mélange.

8. Cycle de mélangeage de la revendication 7, dans lequel l'étape de régulation de température est réalisée avant l'étape de l'injection des produits liquides.

9. Cycle de mélangeage de la revendication 7 ou de la revendication 8, dans lequel au moins l'une des étapes de l'injection des produits liquides et de régulation de température est réalisée de manière itérative pendant le cycle de mélangeage.

10. Cycle de mélangeage selon une quelconque des revendications 7 à 9, dans lequel les autres matières premières introduites pendant l'étape de mélangeage comprennent au moins un matériau élastomère.
